# EUROPEAN PATENT APPLICATION

(11) **EP 2 717 601 A1**
(43) Date of publication of application: **09.04.2014**
(21) Application number: 13178815.0
(22) Date of filing: 31.07.2013
(51) Int. Cl.: H04W 4/04, B60R 25/24, G07C 9/00

(54) **Handheld devices including a key system to manipulate a vehicle**

(30) Priority: 06.08.2012 TW 101128331
(71) Applicant: Hon Hai Precision Industry Co., Ltd., New Taipei City (TW)
(72) Inventor: Chen, Hung-Chang, New Taipei (TW)
(74) Representative: Gray, John James

(57) **Abstract**

A handheld device (100) includes a first main part (10), and a second main part (20). The first main part (10) includes a key system (18) to manipulate a vehicle (30), a storage (16) to store a number of instructions, and a first processor (14) to execute the instructions to generate information. The second main part (10) includes an input unit (24) to generate commands in response to user's operations, and an output unit (22, 27) to output the information.

## Description

### Description of Related Art

Due to the ubiquity of cars and phones, most people carry around car keys and a mobile phone. It is desired to reduce sizes of the key and the mobile phone for people to easily carry. However, nowadays, the mobile phone includes many functions and its size cannot be reduced. The size of the key also cannot be reduced because the key is already small and could be easily lost.

Therefore, there is room for improvement within the art.

### Summary

A handheld device includes a first main part and a second main part. The first main part includes a key system to manipulate a vehicle, a storage to store a number of instructions, and a first processor to execute the instructions to generate information. The second main part includes an input unit to generate commands in response to user's operations, and an output unit to output the information. As a result, the first main part can function as the vehicle key. The first main part includes many functions, thus the second main part which functions as the mobile phone, or the PDA, does not need such functions, and the size of the second main part will be reduced. Therefore, the handheld device has greater convenience for drivers.

### BRIEF DESCRIPTION OF THE DRAWINGS

Many aspects of the embodiments can be better understood with reference to the following drawings. The components in the drawings are not necessarily drawn to scale, the emphasis instead being placed upon clearly illustrating the principles of the present embodiments. Moreover, in the drawings, like reference numerals designate corresponding parts throughout the several views.

FIG. 1 is a schematic view of a handheld device in accordance with an embodiment, the handheld device includes a first main part and a second main part.

FIG. 2 is a functional block diagram of the first main part in FIG. 1.

FIG. 3 is a functional block diagram of the second main part in FIG. 1.

FIG. 4 is a graphical user interface provided by the second main part in FIG. 3.

### DETAILED DESCRIPTION

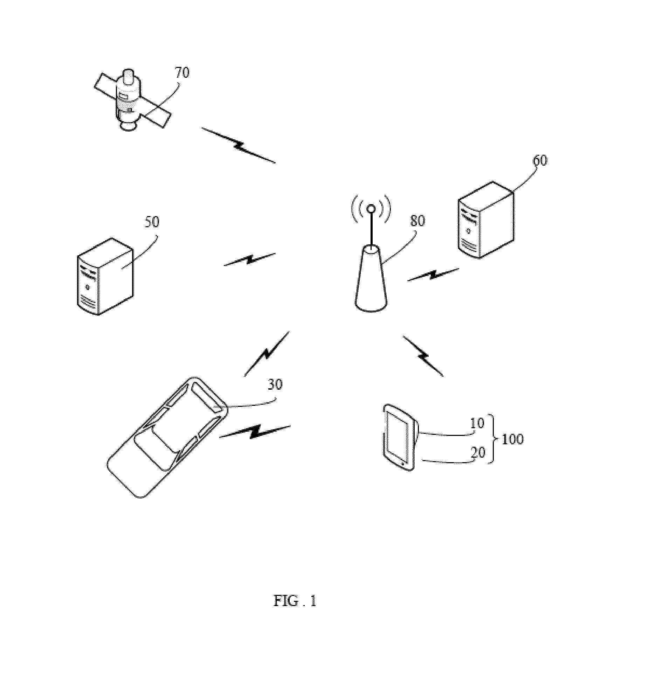

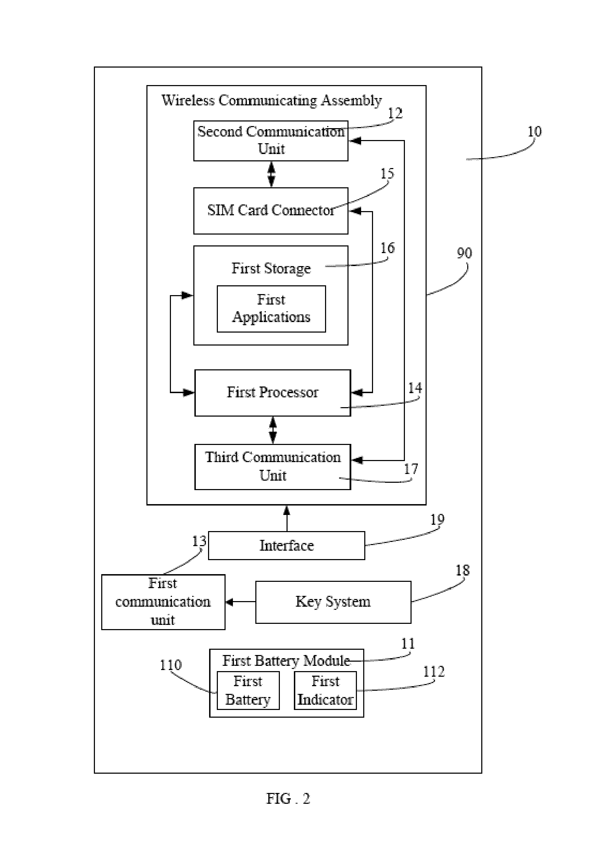

Referring to FIGS. 1 and 2, a handheld device 100 includes a first main part 10, a second main part 20, and a wireless communication assembly 90. The first main part 10 is in a shape of a vehicle key, and thus can be called a vehicle key. The vehicle may be, but is not limited to, a car 30. The second main part 20 can be a mobile phone, a PDA, a palm computer or the like. In this embodiment, the wireless communicating assembly 90 is detachably installed in the first main part 10. In other embodiments, the communication assembly 90 also can be detachably assembled into the second main part 20. The first main part 10 is detachably combined with the second main part 20 and communicates with the second main part 20 via known short range wireless technologies, such as near field communication (NFC), infra red (IR), Bluetooth^{®} and the like.

The first main part 10 is configured to lock and unlock a door lock of a car 30, and to start and shut down an engine of the car 30. The first main part 10 manipulates the door lock wirelessly or mechanically using known technologies. The first main part 10 manipulates the engine mechanically using known technologies. Further, the first main part 10 is further configured to be operable in a mobile telephone network, such as GSM, CDMA, and the like, to dial, send MSM, send emails, and other telephone functions. Moreover, the first main body 10 is further configured to operable in a wireless network, such as GPRS, WLAN, and the like, to communicate with a network server 50 which provides a large number of audio files, video files, articles and news; or communicate with a car service server 60 which provides information of a number of car service shops, such as locations, items, and prices of the items; or communicate with a GPS satellite 70 to establish locations of the car 30. The first main part 10 communicates with the telephone network or the wireless network as described above via base stations 80.

Referring to FIG. 2, the first main part 10 includes a first battery module 11, a first communicating unit 13, a key system 18, and an interface 19 electrically and detachably connected to the wireless communicating assembly 90.

The first battery module 11 provides electrical energy to the first wireless communication unit 13, the key system 18, and the wireless communicating assembly 90. The first battery module 11 includes a first battery 110 and a first indicator 112. The first battery 110 is a rechargeable battery to provide the electrical energy. The first indicator 110 detects a capacity of the first battery 110, and informs the user that the first battery 110 is low when the capacity of the first battery 110 is lower than a predetermined value. In this embodiment, the first indicator 110 is a light which flashes when the capacity of the first battery 110 is lower than the predetermined value.

The key system 18 generates a locking instruction and an unlocking instruction, and transmits the locking and unlocking instructions to the car 30 via the first communication unit 13, to open or close a door, a window, or a trunk of the car 30 (not shown). The key system 18 includes buttons set in the first main part 10 (not shown). The buttons are pressed to generate the locking instruction or the unlocking instruction.

The wireless communicating assembly 90 is inserted into the first main part 10 and electrically connected to the interface 19. The wireless communicating assembly 90 includes a second communication unit 12, a first processor 14, a subscriber identification module (SIM) card connector 15, a first storage 16, and a third wireless communication unit 17.

The SIM card connector 15 is electrically connected to a SIM card ( not shown ) that allows the second communication unit 12 to communicate with the telephone network to dial, send MSM, send emails, and other telephone functions.

The first storage 16 stores a number of first applications/instructions to provide functions such as a calendar function, a computing function, a playing game function, and others.

The third communication unit 17 communicates with the second main part 20 to receive commands from the second main part 20. The commands may be a telephone command, a function command, an Internet surfing command, and a car control command. In detail, the telephone commands may be a calling command, an SMS sending command, or a sound message command. The function command may be a game playing command, an audio playing command, or a video playing command. The Internet surfing command may be a downloading command, an uploading command, or a web page viewing command. The car control command may be a car consultation command, a car location command, or a monitoring command.

The first processor 14 responds to the telephone commands to call the second communication unit 12 to dial telephone number, send voice messages, send SMS, and the like. The first processor 14 further responds to the function command to call the first applications to perform functions, such as the playing game function, the calendar function, the computing function, and the like, and sends corresponding information to the second main part 20. The first processor 14 further responds to the Internet surfing command to use the second communication unit 12 to obtain information from the network server 50, the car service server 60, and store the information into the first storage 16 or send the information to the second main part via the third communication unit 17. The first processor 14 further responds to the car control command to obtain information from within the vehicle such as tire pressure information, oil level information, mileage information, and to obtain the car location from the GPS satellite 70, and transmit the information and the car location information to the second main part 20 via the third communication unit 17.

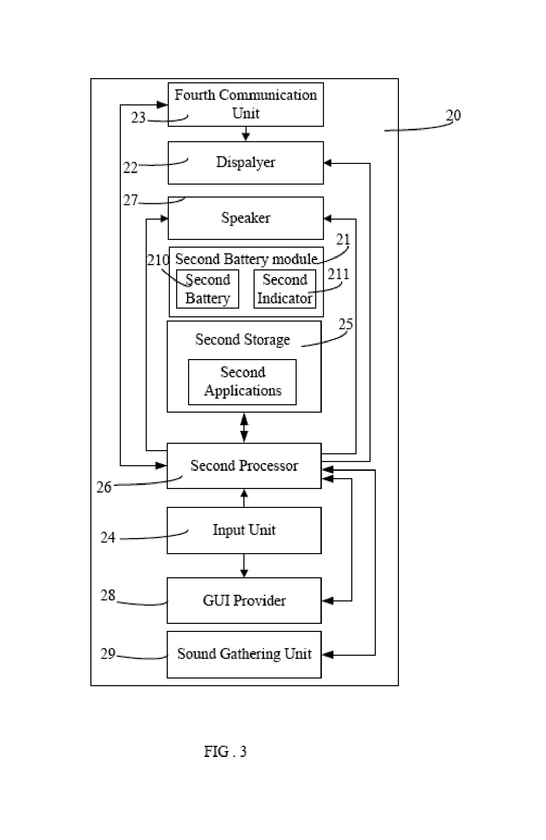

Referring to FIG. 3, the second main part 20 includes a second battery 21, a display 22 for displaying information, a fourth communication unit 23, an input unit 24, a second storage 25, a second processor 26, a speaker 27 for producing sound, a graphical user interface (GUI) provider 28, and an audio gathering unit 29 for gathering sound and converting the sound into audio signals.

The second battery module 21 provides electrical energy to the second main part 20. The second battery module 21 includes a second battery 210 and a second indicator 211. The second battery 210 is a rechargeable battery to provide electrical energy. The second indicator 211 detects a capacity of the second battery 210 and displays information on the display 22 when the capacity of the second battery 210 is lower than a predetermined value.

The input unit 24 may be physical buttons set in the second main part 20, or may be virtual, or soft, buttons displayed on the display 22.

The second storage 25 stores a number of second applications/instructions. Each second application is different from the first application and calls a different function from the first applications.

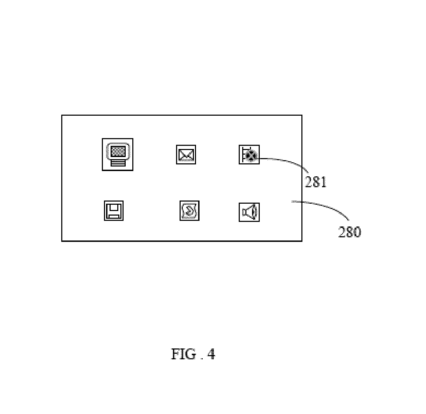

Referring to FIG. 4, the GUI provider 28 provides a GUI 280 and displays the GUI 280 on the display 22 to enable the user to interact with the second main part 20. The GUI 280 includes a number of icons 281 which function as soft buttons, as described above, and correspond to the telephone commands, function commands corresponding to the first application and the second application, and car control commands. In detail, the icons 281 includes a dial icon which may be clicked to generate the calling command, an SMS icon to be clicked to generate the SMS sending command, a sound icon to be clicked to generate the sound message sending command. The icons 281 further include a webpage icon, or an Internet chat tool icon to be clicked to generate Internet surfing commands. The icons 281 further include car information icons to be clicked to generate car control commands.

The fourth communication unit 23 communicates with the third communication unit 17. The second processor 26 determines whether the generated command corresponds to the second applications, and when the generated command corresponds to the second applications, the second processor calls the corresponding second application. Likewise, the second processor 26 transmits the generated command to the first main part 10 to control the main part 10 to carry out the corresponding function, such as telephone function or other function as described above.

The second processor 26 receives the information, such as video signal, and the audio signal from the first main part 10 to the displayer 22 and the speaker 27, so as to output the information. The second processor 26 further transmits an audio signal generated by the audio gathering unit 29 to the first main part 10.

In operation, taking the dial function as an example, firstly, the second main part 20 displays the GUI 280 on the displayer 22. Next, in response to clicking the dial icon on the GUI 280 to dial a desired number, the desired number is transmitted to the first main part 10 via the fourth wireless communication unit 23, then the first main part 10 sends a call to a called party via the second communication unit 12, then the first main part 10 generates a waiting interface and a ring back tone, and then transmits the waiting interface and the ring back tone to the second main part 20 via the third wireless communication unit 18, so as to cause the second main part 20 to display the waiting interface and output the ring back tone. Next, when the called party answers the call, the first main part 10 generates a communication interface and receives sound from the called party, and then transmits the communicating interface and the received sounds to the second main part 20 via the third wireless communication unit 17, so as to cause the second main part 20 to display the communicating interface and output the sound received from the called party. Then, when the call is ended, the connection between the called part and the first main part 10 is disconnected, and the second main part 20 displays the original GUI 280 on the display.

When in use, the first main part 10 and the second main part 20 are combined together so that the handheld device 100 described above is easy for the user to carry. The main part 10 and the second main part 20 are separable, in detail, the first main part 10 is inserted into a switch of the car 30 to start the engine of the car 30, the second main part 20 is positioned in the front of the drivers so that the driver can operate it easily.

As described above, the first main part 10 includes a key system and first applications. As a result, the first main part 10 can function as the vehicle key. Furthermore, the first main part further includes many functions, thus the second main part 20 which functions as the mobile phone, or the PDA, does not need such functions, and the size of the second main part 20 will be reduced. Therefore, the handheld device 100 has greater convenience for drivers.

Even though relevant information and the advantages of the present embodiments have been set forth in the foregoing description, together with details of the functions of the present embodiments, the disclosure is illustrative only; and changes may be made in detail, especially in the matters of shape, size, and arrangement of parts within the principles of the present embodiments to the full extent indicated by the broad general meaning of the terms in which the appended claims are expressed.

## Claims

1. A handheld device comprising:
a first main part comprising:
a key system to manipulate a vehicle;
a storage to store a plurality of instructions; and
a first processor to execute the instructions to generate information; and
a second main part comprising:
an input unit to generate commands in response to user's operations; and
an output unit to output the information.

2. The handheld device of claim 1, wherein the first main part is a vehicle key.

3. The handheld device of claim 1 or 2, wherein the second main part is one of a mobile phone, a personal digital assistant.

4. The handheld device of claim 3, wherein the first main part is detachably assembled to the second main part.

5. The handheld device of any of claims 1 to 4, wherein the output unit is a display which displays the desired information.

6. The handheld device of claim 5, wherein the second main part comprises a graphical user interface (GUI) provider to generate a GUI to display on the display, the GUI comprises a plurality of icons to be clicked to generate the commands.

7. The handheld device of claim 5 or 6, wherein the first main part further comprises a wireless assembly, the wireless assembly comprises a wireless communication unit and a subscriber identification module (SIM) card connector, the SIM card connector is electrically connected to a SIM card to cause the wireless communication unit to communicate with a telephone network via the SIM card.

8. The handheld device of claim 5 or 6 or 7, wherein the wireless assembly is detachably assembled to first main part, the first main part comprises an interface electrically and detachably connected to the wireless assembly.

9. A handheld device comprising:
a first main part;
a second main part;
a communicating assembly detachably assembled in the one of the first main part and the second main part, the communicating assembly comprising:
a first communication unit to receive commands from the other one of the first main part and the second main part;
a storage to store a plurality of instructions; and
a processor to execute the instructions to generate desired information to the other main part so as to output the desired information.

10. The handheld device of claim 9, wherein the wireless assembly comprises a wireless communication unit and a SIM card connector, the SIM card connector is electrically connected to a SIM card, to cause the wireless communication unit to communicate with a telephone network via the SIM card.

11. The handheld device of claim 9 or 10, wherein the first main part is a vehicle key.

12. The handheld device of claim 9 or 10 or 11, wherein the second main part is one of a mobile phone and a PDA.

13. The handheld device of claim 12, wherein the first main part is detachably assembled to the second main part.

14. The handheld device of claim 12 or 13 , wherein the second main part further comprises a GUI provider to generate a GUI to display on a display, the GUI comprises a plurality of icons to be clicked to generate the commands.

15. The handheld device of claim 12 or 13 or 14, wherein the other one of the first main part and the second main part comprises an interface electrically and detachably connected to the wireless assembly.
